# EUROPEAN PATENT APPLICATION

(11) **EP 4 424 446 A1**
(43) Date of publication of application: **04.09.2024**
(21) Application number: 22886124.1
(22) Date of filing: 28.10.2022
(51) Int. Cl.: B23D 57/02, B27B 17/12

(54) **CHAIN SAW**

(30) Priority: 28.10.2021 CN 202111262171
(71) Applicant: Positec Power Tools (Suzhou) Co., Ltd., Suzhou, Jiangsu 215123 (CN)
(72) Inventor: JIANG, Yibang, Suzhou, Jiangsu 215123 (CN); YU, Xuefeng, Suzhou, Jiangsu 215123 (CN)
(74) Representative: Kilburn & Strode LLP
(86) International application number: PCT/CN2022/128257
(87) International publication number: WO 2023/072249

(57) **Abstract**

The present invention relates to a chain saw, including a housing, a working head, a protective member, and a pumping mechanism. The working head includes a guide plate and a cutting element arranged around the guide plate. The cutting element moves around the guide plate to implement cutting. The protective member is movably mounted on the housing, and at least partially covered on the working head. The pumping mechanism is configured to deliver a lubricating medium to the working head. The pumping mechanism is configured to output the lubricating medium as triggered by movement of the protective member. When the working head is in a working state, the protective member is pushable by a to-be-cut object to move in a direction away from the working head, to trigger the pumping mechanism to output the lubricating medium. It is implemented that the pumping mechanism can output the lubricating medium only when the protective member is open and the protective member is moving, and does not output the lubricating medium when the working head is not working or in a no-load state, so that an action of pumping the lubricating medium is performed purposefully and regularly, which effectively avoids dry grinding between the cutting element and the guide plate, prolongs the service life of the working head, and can avoid waste of the lubricating medium.

## Description

### TECHNICAL FIELD

The present invention relates to the field of electric tool technologies, and in particular, to a chain saw.

### BACKGROUND

In many cutting or pruning tools, a chain saw is always popular among users due to characteristics such as sufficient cutting power and convenient operation. A conventional chain saw generally includes a chain equipped with a cutting blade and a guide plate configured to support the chain. In working, the chain is driven by a motor to rotate around a surface of the guide plate, to cut a workpiece.

Existing chain saws, especially single-hand saws, due to their small sizes and compact structures, most chain saws do not have an oil pumping mechanism to deliver lubricating oil to the chain, resulting in the chain being in a dry-grinding running state for a long time, which seriously affects the service life of the chain. Therefore, currently, some chain saws include a built-in oil pumping mechanism. One type is an automatic oil pumping structure an oil pump is driven by a motor to continuously pump oil when the motor is working. Another type is a manual oil pumping structure oil pumping through manual pressing by a user. An oil tank is arranged on a housing of the manual oil pumping structure, and an elastic hemisphere is arranged on the oil tank for the user to press for oil pumping.

However, a chain saw with an automatic oil pumping structure continuously performs oil pumping in working, resulting in overflow of excessive lubricating oil stored on the guide plate and splashing of oil no-load, and also resulting in serious waste of lubricating oil and pollution to the environment. Moreover, a chain saw with a manual oil pumping structure is affected by human factors, and is prone to phenomena such as oiling is forgotten or oiling is performed irregularly, resulting in dry grinding between the chain and the guide plate in working, which seriously shortens the service lives of the guide plate, the chain, and the cutting blade.

### SUMMARY

To resolve the foregoing problems, the present invention provides a chain saw, to perform an action of pumping a lubricating medium purposefully and regularly, which avoids waste of the lubricating medium, ensures stable running of the chain saw.

A chain saw includes:
a housing;
a working head, including a guide plate and a cutting element arranged around the guide plate, the guide plate being mounted on the housing, and at least partially extending out of the housing;
a driving device, mounted on the housing, configured to connect to and drive the cutting element to move around the guide plate;
a protective member, movably mounted on the housing, and at least partially covered on the working head;
the chain saw further includes a pumping mechanism, the pumping mechanism being configured to deliver a lubricating medium to the guide plate and/or the cutting element; the pumping mechanism being configured to output the lubricating medium as triggered by movement of the protective member.

Further, the protective member is configured such that when the working head gradually cuts into a to-be-cut object, the protective member is pushable by the to-be-cut object to move in a direction away from the working head, to trigger the pumping mechanism to output the lubricating medium.

Further, when the protective member does not move or moves in a direction toward the working head, the pumping mechanism does not output the lubricating medium.

Further, the protective member is pivotally connected to the housing.

Further, a return member is further connected between the protective member and the housing, the return member acting on the protective member, being configured to drive the protective member to return to an initial position.

Further, the chain saw further includes a linkage mechanism, the linkage mechanism being movably arranged and linked to the protective member, the protective member moving to drive the linkage mechanism to move, and triggering the pumping mechanism through the linkage mechanism to output the lubricating medium.

Further, the pumping mechanism includes a lubricating medium storage chamber, a lubricating medium input channel, a lubricating medium output channel, and a control portion, the lubricating medium input channel communicating with the lubricating medium storage chamber, the lubricating medium output channel extending to a position corresponding to the guide plate and/or the cutting element, the control portion being arranged between the lubricating medium input channel and the lubricating medium output channel, a lubricating medium path being formed between the lubricating medium input channel and the lubricating medium output channel, and the control portion being configured to control an on-off state of the lubricating medium path, to enable the pumping mechanism to output the lubricating medium or not to output the lubricating medium; the linkage mechanism is configured to trigger the control portion.

Further, the linkage mechanism triggers, by resisting and cooperating with the control portion, the pumping mechanism to output the lubricating medium.

Further, the control portion includes a one-way valve and an elastic control, an elastic working chamber being formed in the elastic control, the elastic control being connected to the lubricating medium input channel and the lubricating medium output channel in a sealed manner, and the elastic working chamber communicating with the lubricating medium input channel and the lubricating medium output channel respectively;
the one-way valve is arranged between the elastic working chamber and the lubricating medium input channel and the lubricating medium output channel, configured to control the lubricating medium to only flow from the lubricating medium input channel into the elastic working chamber in one direction and flow from the elastic working chamber into the lubricating medium output channel in one direction;
the linkage mechanism is configured to resist and cooperate with the elastic control, and control an on-off state of the one-way valve by pushing down or releasing the elastic control, to further control communication between the elastic working chamber and the lubricating medium output channel or the lubricating medium input channel, to enable the pumping mechanism to output the lubricating medium or not to output the lubricating medium.

Further, the pumping mechanism further includes a lubricating medium storage container, a lubricating medium input pipe, a lubricating medium output pipe, and a mounting seat, the lubricating medium storage chamber being formed inside the lubricating medium storage container, the lubricating medium input channel being formed inside the lubricating medium input pipe, the lubricating medium output channel being formed inside the lubricating medium output pipe, the lubricating medium input pipe, the lubricating medium output pipe, the one-way valve, and the elastic control being connected to the mounting seat.

Further, the pumping mechanism further includes a gland, the gland being connected onto the mounting seat, and tightly pressing an edge of the elastic control between the gland and the mounting seat, to connect the elastic control and the mounting seat in a sealed manner.

Further, the linkage mechanism includes a cam, the cam being linked to the protective member, the cam including a resistance portion configured to resist and cooperate with the control portion, the cam moving with the protective member to trigger the control portion, to enable the pumping mechanism to output the lubricating medium.

Further, the cam is arranged rotatably around a fixed axis, an outline of the cam being configured such that in a process in which the cam moves toward the control portion, the resistance portion is at least partially configured to progressively push down the control portion, to enable the pumping mechanism to continuously output the lubricating medium.

Further, the chain saw further includes a partition plate, the linkage mechanism resisting and cooperating with the control portion through the partition plate, and the partition plate being movably mounted on the housing and configured to transfer a pushing pressure of the linkage mechanism to the control portion.

Further, the chain saw is a one-hand handheld electric chain saw;
the chain saw further includes a grip portion for operation personnel to hold with one hand, a transmission mechanism, and a battery pack; the battery pack is electrically connected to the driving device, configured to supply power to the driving device; the transmission mechanism is connected between the driving device and the cutting element, configured to transfer power output by the driving device to the cutting element, to enable the cutting element to move around the guide plate;
the driving device and the transmission mechanism are mounted inside the housing and arranged between the grip portion and the working head, the battery pack is mounted on the housing and arranged on an end of the grip portion away from the working head.

In the chain saw of the present invention, the pumping mechanism is triggered by movement of the protective member to output the lubricating medium. When the working head is in a working state, the to-be-cut object pushes the protective member to move in a direction away from the working head, to trigger the pumping mechanism to output the lubricating medium. When the working head is in a non-working or no-load state, the protective member does not move or gradually returns, the pumping mechanism does not output the lubricating medium. It is implemented that the pumping mechanism can output the lubricating medium only when the protective member is open and the protective member is moving, and does not output the lubricating medium when the working head is not working or in a no-load state. In this way, an action of pumping the lubricating medium is performed purposefully and regularly, which not only can effectively avoid dry grinding between the cutting element and the guide plate, which is beneficial to prolonging the service life of the working head, but also can avoid waste of the lubricating medium, and in addition, is also beneficial to improving the working environment.

### BRIEF DESCRIPTION OF THE DRAWINGS

Accompanying drawings that constitute a part of this application are used for providing further understanding about the present invention. Exemplary embodiments of the present invention and descriptions thereof are used for explaining the present invention, and do not constitute an inappropriate limitation on the present invention.

To describe the technical solutions in the embodiments of the present invention more clearly, the following briefly describes the accompanying drawings required for describing the embodiments. Apparently, the accompanying drawings in the following description show merely some embodiments of the present invention, a person of ordinary skill in the art can still derive other drawings from these accompanying drawings without creative efforts.
FIG. 1 is a schematic structural diagram of a chain saw in an embodiment of the present invention;
FIG. 2 is a schematic structural diagram of a chain saw in a non-working state in an embodiment of the present invention;
FIG. 3 is a schematic structural diagram of a chain saw in a working state in an embodiment of the present invention;
FIG. 4 is a schematic structural diagram of an oil pumping mechanism in an embodiment of the present invention;
FIG. 5 is a cross-sectional view of the chain saw shown in FIG. 1 along A-A.

100. chain saw; 110. housing; 111. grip portion; 112. support portion; 113. positioning column; 120. working head; 121. guide plate; 122. cutting element; 130. motor; 140. protective member; 141. rotating shaft; 142. return member; 150. oil pumping mechanism; 151. oil storage container; 1511. oil storage chamber; 152. oil inlet pipe; 1521. oil inlet channel; 153. oil outlet pipe; 1531. oil outlet channel; 1532. oil outlet; 154. control portion; 1541. elastic control; 1542. elastic working chamber; 1543. one-way valve; 1544. mounting seat; 1545. gland; 155. oil inlet; 156. sealing sleeve; 160. linkage mechanism; 161. cam; 1611. resistance portion; 170. partition plate; 171. shaft hole; 180. transmission mechanism; 190. battery pack interface; 200. to-be-cut object.

### DETAILED DESCRIPTION

To make the foregoing objects, features, and advantages of the present invention more comprehensible, detailed description is made to specific implementations of the present invention below with reference to the accompanying drawings. In the following description, many specific details are described for thorough understanding of the present invention. However, the present invention can be implemented in many other manners different from those described herein. A person skilled in the art can make similar improvements without departing from the connotation of the present invention. Therefore, the present invention is not limited to the specific embodiments disclosed below.

A chain saw of the present invention includes a housing 110; a working head 120, including a guide plate 121 and a cutting element 122 arranged around the guide plate 121, the guide plate 121 being mounted on the housing 110, and at least partially extending out of the housing 110; a driving device, mounted on the housing 110, configured to connect to and drive the cutting element 122 to move around the guide plate 121; a protective member 140, movably mounted on the housing 110, and at least partially covered on the working head 120; a pumping mechanism, configured to deliver a lubricating medium to the guide plate 121 and/or the cutting element 122. The pumping mechanism 150 is configured to output the lubricating medium as triggered by movement of the protective member 140.

The pumping mechanism includes a lubricating medium storage chamber, a lubricating medium input channel, a lubricating medium output channel, and a control portion 154. The lubricating medium input channel communicates with the lubricating medium storage chamber. The lubricating medium output channel extends to a position corresponding to the guide plate 121 and/or the cutting element 122. The control portion 154 is arranged between the lubricating medium input channel and the lubricating medium output channel. A lubricating medium path is formed between the lubricating medium input channel and the lubricating medium output channel, and the control portion 154 is configured to control an on-off state of the lubricating medium path, to enable the pumping mechanism to output the lubricating medium or not to output the lubricating medium.

Further, the pumping mechanism further includes a lubricating medium storage container, a lubricating medium input pipe, and a lubricating medium output pipe. The lubricating medium storage chamber is formed inside the lubricating medium storage container. The lubricating medium input channel is formed inside the lubricating medium input pipe. The lubricating medium output channel is formed inside the lubricating medium output pipe.

In this embodiment of the present invention, the lubricating medium can be configured as a lubricating medium with specific fluidity such as lubricating oil or lubricating paste. Specific implementations of the present invention are described in detail by using lubricating oil as an example. Correspondingly, the pumping mechanism is configured as an oil pumping mechanism 150, the lubricating medium storage container is configured as an oil storage container 151, the lubricating medium storage chamber is configured as an oil storage chamber 1511, the lubricating medium input pipe is configured as an oil inlet pipe 152, the lubricating medium input channel is configured as an oil inlet channel 1521, the lubricating medium output pipe is configured as an oil outlet pipe 153, the lubricating medium output channel is configured as an oil outlet channel 1531.

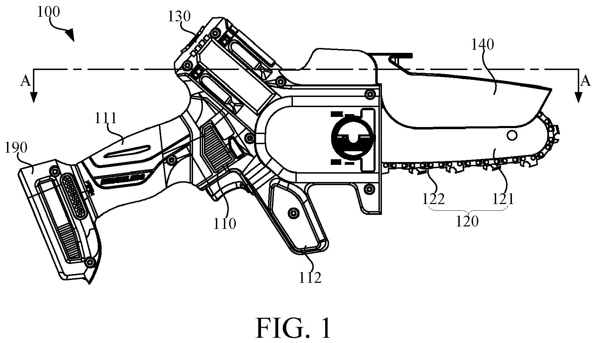

Referring to FIG. 1 to FIG. 3, a chain saw 100 shown in an embodiment of the present invention includes: a housing 110; a working head 120, including a guide plate 121 and a cutting element 122 arranged around the guide plate 121, the guide plate 121 being mounted on the housing 110, and at least partially extending out of the housing 110; a driving device, mounted on the housing 110, configured to connect to and drive the cutting element 122 to move around the guide plate 121; a protective member 140, movably mounted on the housing 110, and at least partially covered on the working head 120; an oil pumping mechanism 150 (also referred to as an oil pumping structure), configured to deliver lubricating oil to the guide plate 121 and/or the cutting element 122. The oil pumping mechanism 150 is configured to output the lubricating oil as triggered by movement of the protective member 140.

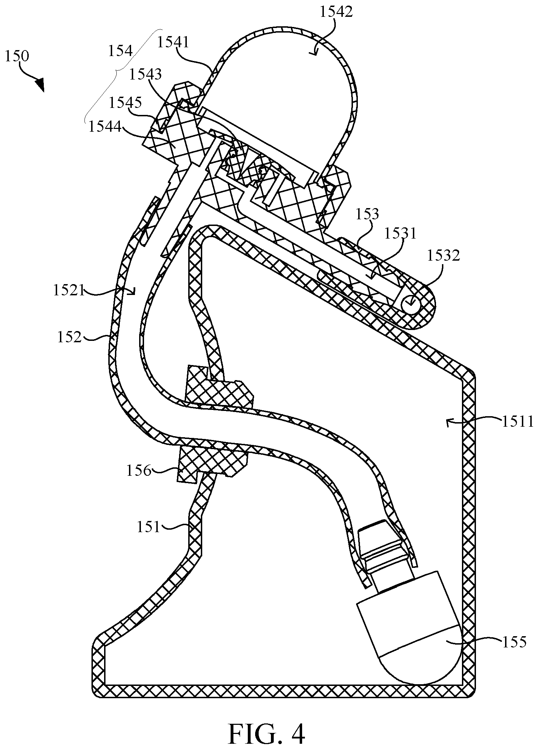

Further, referring to FIG. 4, the oil pumping mechanism 150 includes an oil storage chamber 1511, an oil inlet channel 1521, an oil outlet channel 1531, and a control portion 154 (also referred to as a control component). The oil inlet channel 1521 communicates with the oil storage chamber 1511. The oil outlet channel 1531 extends to a position corresponding to the guide plate 121 and/or the cutting element 122. The control portion 154 is arranged between the oil inlet channel 1521 and the oil outlet channel 1531. An oil supply path is formed between the oil inlet channel 1521 and the oil outlet channel 1531, and the control portion 154 is configured to control an on-off state of the oil supply path, to enable the oil pumping mechanism 150 to output the lubricating oil or not to output the lubricating oil.

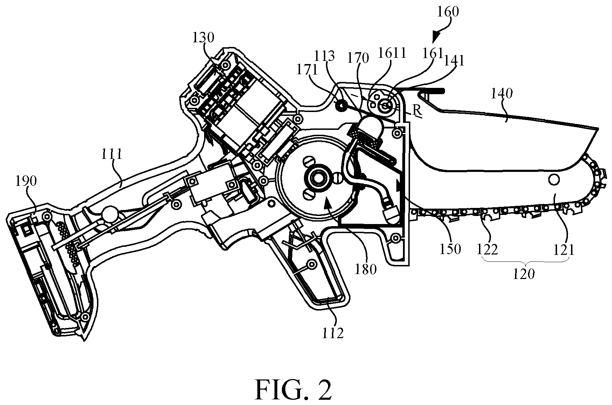

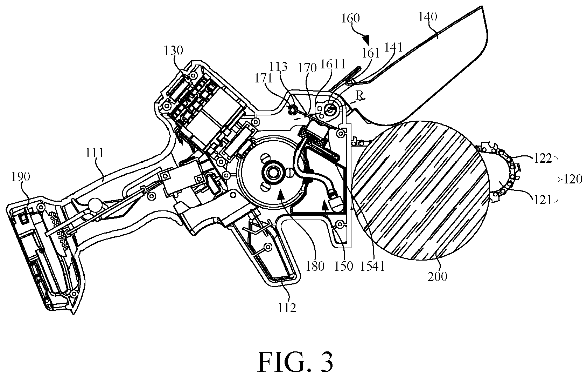

Further, referring to FIG. 2 and FIG. 3, the protective member 140 is pivotally connected to the housing 110. The protective member 140 is configured such that when the working head 120 gradually cuts into a to-be-cut object 200, the protective member 140 is pushable by the to-be-cut object 200 to move in a direction away from the working head 120, to trigger the oil pumping mechanism 150 to output the lubricating oil. When the working head 120 gradually exits the to-be-cut object 200, the protective member 140 is configured to gradually return to an initial position, that is, the protective member 140 moves in a direction toward the working head 120. In this case, the oil pumping mechanism 150 does not output the lubricating oil. In addition, when the protective member 140 does not move, the oil pumping mechanism 150 also does not output the lubricating oil.

Further, referring to FIG. 2 and FIG. 3, the chain saw 100 further includes a linkage mechanism 160. The linkage mechanism 160 is movably arranged and linked to the protective member 140. The protective member 140 moves to drive the linkage mechanism 160 to move, and triggers the oil pumping mechanism 150 through the linkage mechanism 160 to output the lubricating oil. Specifically, the linkage mechanism 160 is configured to trigger the control portion 154. The linkage mechanism 160 includes a cam 161. The cam 161 is linked to the protective member 140, and resists and cooperates with the control portion 154. The cam 161 includes a resistance portion 1611 configured to resist and cooperate with the control portion 154. The cam 161 pivotally moves with the protective member 140 to trigger the control portion 154, to enable the oil pumping mechanism 150 to output the lubricating oil. In this embodiment, the linkage mechanism 160 is designed into a structure of the cam 161, to simplify an internal structure of the chain saw 100 while ensuring stable force transfer between the protective member 140 and the control portion 154, which is beneficial to miniaturization and light-weighting of a product.

It should be noted that movement of the control portion 154 triggering the cam 161 is not limited to pivotally moving with the protective member 140 within a specific angle range. It is also configured as pivotal movement of the protective member 140 to link the cam 161 for circular rotation movement, through the rotation of the cam 161, the control portion 154 is triggered to enable the oil pumping mechanism 150 to output the lubricating oil.

In the chain saw 100 of the present invention, the linkage mechanism 160 is driven by movement of the protective member 140 to move, further, the control portion 154 of the oil pumping mechanism 150 is triggered by the movement of the linkage mechanism 160, to control an oil pumping state of the oil pumping mechanism 150. To help understand the oil pumping principle of the chain saw 100, description is made by using a cutting process of the chain saw 100 as an example. In this embodiment, referring to FIG. 3, when the working head 120 is in a working state, and the working head 120 gradually cuts into the to-be-cut object 200, the to-be-cut object 200 pushes up the protective member 140, to enable the protective member 140 to move in a direction away from the working head 120, at the same time, the cam 161 linked to the linkage mechanism 160 pivotally moves with it. During movement of the cam 161, the resistance portion 1611 of the cam 161 abuts against the control portion 154 of the oil pumping mechanism 150 and pushes down the control portion 154, which triggers the control portion 154 to control the oil pumping mechanism 150 to deliver the lubricating oil to the guide plate 121 and/or the cutting element 122, to ensure stable working of the working head 120, which effective avoids dry grinding between the cutting element 122 and guide plate 121, and is beneficial to prolonging the service life of working head 120. Referring to FIG. 2, when the working head 120 is in a non-working or no-load state, the protective member 140 is located at an initial position of the protective member 140, or is in an open position but does not move, or gradually exits the to-be-cut object 200 with the working head 120 to gradually return to the initial position. In the foregoing state, the cam 161 of the linkage mechanism 160 does not move or gradually returns, during which the oil pumping mechanism 150 does not deliver the lubricating oil to the guide plate 121 and/or the cutting element 122. The chain saw 100 utilizes the linkage mechanism 160 to synchronously respond to movement of the protective member 140, so that the oil pumping mechanism 150 outputs the lubricating oil only when the working head 120 is working and the protective member 140 is open, and does not output the lubricating oil when the working head 120 is in a non-working or no-load state. In this way, the action of oil pumping (that is, outputting the lubricating oil) is performed purposefully and regularly, to avoid waste of the lubricating oil, which in addition, is also beneficial to improving the working environment. The to-be-cut object 200 is, in some embodiments, but not limited to, wood, a rubber block, a plastic block, and the like. It should be noted that the no-load state of the working head 120 means that the working head 120 is in an idling state. That is, the cutting element 122 moves around the guide plate 121, but does not cut the to-be-cut object 200.

It should be noted that the oil pumping manner of the oil pumping mechanism 150 is not limited thereto. It is also configured such that oil pumping and the like are performed through electric or pneumatic oil pumping, by pressing a pump head, or in a manner of using rubber diaphragm. When the oil pumping mechanism 150 adopts electric or pneumatic oil pumping, the linkage mechanism 160 is designed in some embodiments into a structure such as a lever or a pressing block, to mechanically switch on a control switch on the oil pumping mechanism 150. Certainly, the linkage mechanism 160 is also designed into a sensing module such as a Hall sensor, to sense movement of the protective member 140, to control an oil pumping state and the like of the oil pumping mechanism 150 with an electrical signal. When a pressing pump head or a rubber cap is adopted as the oil pumping mechanism 150, the linkage mechanism 160 also has a variety of structural designs. For example, the linkage mechanism 160 is designed into a pressing block, a crank slider mechanism, a gear and rack-combined structure, or the like.

It should also be noted that, the movement of the protective member 140 relative to the housing 110 is not limited to pivotal movement, at least is also configured as vertical movement. In addition, a manner in which the protective member 140 is linked to and control the control portion 154 is also not limited to when the protective member 140 moves in a direction away from the working head 120, the oil pumping mechanism 150 is triggered to output the lubricating oil. It should be understood that the protective member 140 moves in a direction away from the working head 120; or the protective member 140 moves in a direction toward the working head 120; or the protective member 140 reciprocates in a direction of first moving away from and then moving toward the working head 120; or reciprocation of the protective member 140 in a direction of first moving away from and then moving toward the working head 120 and the like all can trigger the control portion 154 to control the oil pumping mechanism 150 to output the lubricating oil. Therefore, in this embodiment, a manner in which the protective member 140 triggers the oil pumping mechanism 150 to output the lubricating oil is not specifically limited provided that the oil pumping mechanism 150 can be triggered to output the lubricating oil.

In addition, in addition to being pushed up by the to-be-cut object 200, the protective member 140 moves due to an active operation performed by a user. For example, the working head 120 in a no-load state needs to be pre-lubricated or maintained, a user manually operates the protective member 140, to enable the protective member 140 to move in a direction away from or toward the working head 120, and control the oil pumping mechanism 150 to perform oil pumping in a more purposeful and targeted manner.

Still further, referring to FIG. 4, the control portion 154 includes a one-way valve 1543 and an elastic control 1541 (also referred to as an elastic cap). An elastic working chamber 1542 (also referred to as a working chamber) is formed in the elastic control 1541. The elastic control 1541 is connected to the oil inlet channel 1521 and the oil outlet channel 1531 in a sealed manner, and the elastic working chamber 1542 communicates with the oil inlet channel 1521 and the oil outlet channel 1531 respectively. The one-way valve 1543 is arranged in the elastic working chamber 1542 and between the oil inlet channel 1521 and the oil outlet channel 1531, and configured to control the lubricating oil to only flow from the oil inlet channel 1521 into the elastic working chamber 1542 in one direction and flow from the elastic working chamber 1542 into the oil outlet channel in one direction 1531. In this embodiment, the linkage mechanism 160 triggers, by resisting and cooperating with the control portion 154, the control portion 154 to control the oil pumping mechanism 150 to output the lubricating oil. Specifically, the linkage mechanism 160 is configured to resist and cooperate with the elastic control 1541, and control an on-off state of the one-way valve 1543 by pushing down or releasing the elastic control 1541, to further control communication between the elastic working chamber 1542 and the oil outlet channel 1531 or the oil inlet channel 1521, to enable the oil pumping mechanism 150 to output the lubricating oil or not to output the lubricating oil.

It should be noted that the elastic control 1541 has elastic compression and recovery functions, can compress and deform when being pressed, can elastically return to its original state when not being pressed. There are many choices for the material of the elastic control 1541 provided that elastic compression and recovery can be satisfied. For example, the elastic control 1541 is a rubber cap in some embodiments.

The working principle of the oil pumping mechanism 150 of this embodiment is: Referring to FIG. 3 and FIG. 4, when the linkage mechanism 160 resists and pushes down elastic control 1541, the elastic control 1541 deforms under a force, and the elastic working chamber 1542 is compressed. Due to the one-way valve 1543 is arranged among the oil inlet channel 1521, the oil outlet channel 1531, and the elastic working chamber 1542. Therefore, after the elastic working chamber 1542 is compressed, the space decreases, the internal pressure increases. Under the action of the pressure difference, the one-way valve 1543 controls the elastic working chamber 1542 to communicate with the oil outlet channel 1531. The lubricating oil inside the elastic working chamber 1542 flows from the elastic working chamber 1542 to the oil outlet channel 1531 in one direction, and is delivered by the oil outlet channel 1531 to the guide plate 121 and/or the cutting element 122, to complete oil pumping once. When the linkage mechanism 160 gradually moves away from and releases the elastic control 1541, the elastic control 1541 returns to its initial shape by its elasticity. The space of the elastic working chamber 1542 increases, the internal pressure decreases. Under the action of the pressure difference, the one-way valve 1543 controls the elastic working chamber 1542 to communicate with the oil inlet channel 1521. The lubricating oil inside the oil storage chamber 1511 enters into the elastic working chamber 1542 through the oil inlet channel 1521, to prepare for next oil pumping. When the elastic control 1541 returns to the initial shape or keeps an amount of deformation unchanged, pressures inside the elastic working chamber 1542, the oil inlet channel 1521, and the oil outlet channel 1531 reach balance, the one-way valve 1543 controls the elastic working chamber 1542 to communicate with neither of the oil inlet channel 1521 and the oil outlet channel 1531.

Specifically, in this embodiment, referring to FIG. 4, the oil pumping mechanism 150 includes an oil storage container 151(also referred to as an oil pumping body), an oil inlet pipe 152, an oil outlet pipe 153, a mounting seat 1544, the one-way valve 1543, and the elastic control 1541. The oil storage chamber 1511 is formed in the oil storage container 151. The oil inlet channel 1521 is formed inside the oil inlet pipe 152. The oil outlet channel 1531 is formed inside the oil outlet pipe 153. The oil inlet pipe 152, the oil outlet pipe 153, the one-way valve 1543, and the elastic control 1541 are connected to the mounting seat 1544. An end of the oil inlet pipe 152 away from the control portion 154 extends into the oil storage chamber 1511, to implement communication between the oil inlet channel 1521 and the oil storage chamber 1511. An oil outlet 1532 is formed at an end of the oil outlet pipe 153 away from the control portion 154. The oil outlet 1532 extends to the guide plate 121 or the cutting element 122, to deliver the lubricating oil to the guide plate 121 and/or the cutting element 122. Further, the oil pumping mechanism 150 further includes a gland 1545. The gland 1545 is connected onto the mounting seat 1544, and tightly presses an edge of the elastic control 1541 between the gland 1545 and the mounting seat 1544, to connect the elastic control 1541 and the mounting seat 1544 in a sealed manner. In this way, by tightly pressing the elastic control 1541 onto the mounting seat 1544, the air tightness of the elastic working chamber 1542 can be improved, to avoid an air leakage or oil leakage phenomenon. In addition, to help the lubricating oil inside the oil storage chamber 1511 enter into the oil inlet channel 1521, an end portion of the oil inlet pipe 152 away from the control portion 154 is connected to an oil inlet 155, to enable the end portion of the oil inlet pipe 152 to sink to the bottom of the oil storage chamber 1511. In addition, a sealing sleeve 156 is further arranged between the oil inlet pipe 152 and the oil storage container 151. The sealing sleeve 156 is sleeved over the oil inlet pipe 152 and embedded into a hole wall of the oil storage container 151, to improve the sealing between the oil inlet pipe 152 and the oil storage container 151, thereby avoiding occurrence of an oil leakage phenomenon.

It should be noted that, the oil pumping mechanism 150 delivers the lubricating oil to the guide plate 121 and/or the cutting element 122 should be understood as: According to actual needs, the oil outlet 1532 is arranged at a position corresponding to the guide plate 121, or is arranged at a position corresponding to the cutting element 122, or is arranged at an intermediate position at which the guide plate 121 cooperates with the cutting element 122, provided that it is more beneficial to lubrication between the guide plate 121 and the cutting element 122.

It should also be noted that the structure of the oil pumping mechanism 150 is not limited thereto. In another embodiment, the oil pumping mechanism 150 is also configured such that the oil inlet channel 1521 and the oil outlet channel 1531 are directly machined on the oil storage container 151. In a manner such as drilling or trenching the oil storage container 151, the oil inlet channel 1521 and the oil outlet channel 1531 are formed around the oil storage chamber 1511.

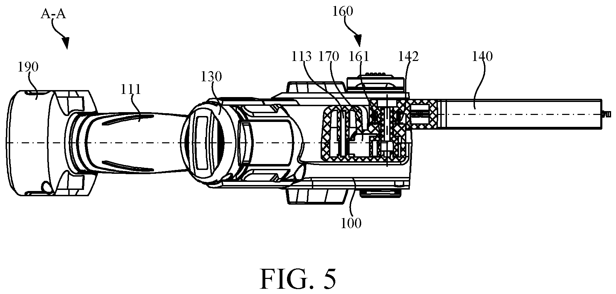

In an embodiment of the present invention, referring to FIG. 2 and FIG. 5, a return member 142 is further connected between the protective member 140 and the housing 110. The return member 142 acts on the protective member 140, and is configured to drive the protective member 140 to return to the initial position, is covered on the working head 120, to provide effective protection for working head 120 in a non-working or no-load state while preparing for next cutting. Specifically, in this embodiment, the protective member 140 is pivotally connected to the housing 110 by a rotating shaft 141. The return member 142 is a torsion spring sleeved over the rotating shaft 141, but a structure of the return member 142 is not limited thereto, according to an actual application, is also configured as a spring, elastic rubber, an elastic metal sheet, or the like.

In an embodiment of the present invention, the cam 161 is arranged rotatably around a pivotal axis 141 of the protective member 140, and is linked to the protective member 140 by a fixed connection or in an abutting manner. While performing a reciprocating pivoting motion around the pivotal axis 141, the protective member 140 is linked to the cam 161 to perform a reciprocating pivoting motion. The resistance portion 1611 of the cam 161 can trigger the control portion 154 to enable the oil pumping mechanism 150 to output the lubricating oil.

In an embodiment of the present invention, referring to FIG. 3, an outline of the cam 161 is configured such that in a process in which the cam 161 moves toward the control portion 154, the resistance portion 1611 is at least partially configured to progressively push down the control portion 154, to enable the oil pumping mechanism 150 to continuously output the lubricating oil. Specifically, in this embodiment, the resistance portion 1611 has a varying diameter, that is, the resistance portion 1611 is an involute curved surface relative to a pivotal axis 141 thereof, and during movement of the resistance portion 1611 toward the control portion 154, a diameter of a contact point gradually increases, so that the cam 161 can progressively push down the control portion 154 to gradually increase the pushing force on the control portion 154, and control the oil pumping mechanism 150 to continuously perform oil pumping as a cutting depth of the working head 120 increases, so that the working head 120 can be effective lubricated in the entire cutting process.

It should be noted that in another embodiment, the resistance portion 1611 of the cam 161 is configured such that a front section thereof has a varying diameter and a rear section thereof has an equal diameter. When the front section of the resistance portion 1611 of the cam 161 abuts against the elastic control portion 1541, the cam 161 progressively pushes down the control portion 154, to enable the oil pumping mechanism 150 to continuously perform oil pumping. When the rear section of the resistance portion 1611 of the cam 161 abuts against the elastic control 1541, as the protective member 140 rotates, the cam 161 does not continue increasing the pushing force on the control portion 154, so that an amount of oil pumped by the oil pumping mechanism 150 each time is kept constant.

In addition, in another embodiment, the linkage mechanism 160 is, in some embodiments, also designed as a seesaw structure, a gear and rack-combined structure, a crank slider mechanism, or the like. For example, when the linkage mechanism 160 is designed as a seesaw structure, one end of the seesaw abuts against the protective member 140, and an other end of the seesaw abuts against the control portion 154. When the linkage mechanism 160 is designed as a gear and rack-matched structure, a gear is connected to the rotating shaft 141, a rack is meshed with the gear and resists and cooperates with the control portion 154, and so on.

It should be noted that the foregoing "resistsand cooperates with" should be understood as including direct resistance and cooperation and indirect resistance and cooperation. The direct resistance and cooperation is configured such that when the cam 161 rotates to a specific position, the resistance portion 1611 directly resists the control portion 154. In addition, the indirect resistance and cooperation is configured such that there is an intermediate structure between the resistance portion 1611 of the cam 161 and the control portion 154, and the pushing force on the resistance portion 1611 is transferred to the control portion 154 by the intermediate structure.

In an embodiment of the present invention, the indirect resistance and cooperation is adopted between the linkage mechanism 160 and the control portion 154. Referring to FIG. 3 and FIG. 4, a partition plate 170 is arranged between the linkage mechanism 160 and the control portion 154. The linkage mechanism 160 resists and cooperates with the control portion 154 through the partition plate 170. The partition plate 170 is movably mounted on the housing 110 and configured to transfer a pushing pressure of the linkage mechanism 160 to the control portion 154. Because the cam 161 is in a rotating state when pushing down the control portion 154, friction on the control portion 154 is increased, which affects the service life of the oil pumping mechanism 150. Therefore, in this embodiment, the partition plate 170 is added between the cam 161 and the control portion 154, so that the cam 161 indirectly resists the control portion 154, which not only can ensure that the control portion 154 receives a sufficient pushing force, but also can prevent the cam 161 from directly rubbing with the control portion 154, thereby prolonging the service life of the control portion 154. Specifically, referring to FIG. 5, one end of the partition plate 170 is pivotally connected into the housing 110, an other end thereof is movably arranged as a free end, so that the pushing force of the cam 161 can be better transferred to the control portion 154 as the control portion 154 is pressed down and rebounds. A positioning column 113 is arranged on an inner wall of the housing 110. The partition plate 170 is provided with a shaft hole 171. The partition plate 170 is sleeved over the positioning column 113 through the shaft hole 171, to implement a pivotal connection between the partition plate 170 and the housing 110.

In an embodiment of the present invention, the chain saw 100 further includes a protective member 140 locking module, configured to control the protective member 140 to be locked or movable relative to the housing 110. The protective member 140 locking module includes a control module and a locking module. The locking module includes two working states, that is, a locked state and an unlocked state. In the locked state, the locking module locks the protective member 140, to prevent the protective member 140 from moving relative to the housing 110. In the unlocked state, the locking module unlocks the protective member 140, to enable the protective member 140 to move relative to the housing 110. The control module is connected to the locking module and controls the working state of the locking module. When the working head 120 is in a working state, the control module controls the locking module to unlock the protective member 140, so that the protective member 140 can move relative to the housing 110, can normally trigger the oil pumping mechanism 150 to output the lubricating oil. When the working head 120 is in a non-working state, the control module controls the locking module to lock the protective member 140, to prevent the protective member 140 from moving relative to the housing 110 and triggering the oil pumping mechanism 150 to output the lubricating oil, thereby preventing the protective member 140 from moving during transportation and causing the oil pumping mechanism 150 to perform oil pumping mistakenly.

It should be noted that a manner in which the locking module locks the protective member 140 can be a latching manner, a magnetic attraction manner, a clamping manner, or the like. For example, a motor and screw rod-combined structure is used as the locking module, which controls a motor to drive a screw rod, to insert the screw rod into a pin hole on the protective member 140, to implement locking. Alternatively, a relay device is used as the locking module, which tightly attracts the protective member 140 after being powered on, to implement locking. In addition, the control module can be, but is not limited to, a microcontroller, a programmable controller, an electronic control unit, or the like.

In an embodiment of the present invention, referring to FIG. 1 and FIG. 2, the chain saw 100 is a one-hand handheld electric chain saw. A grip portion 111 (is referred to as a holding portion) for operation personnel to hold with one hand and a support portion 112 are formed on the housing 110. The grip portion 111 is arranged to help the operation personnel to hold, which improves the use convenience of the product. The support portion 112 is arranged to help to support the weight of the entire product in working, which makes the operation performed by operation personnel more labor-saving. Further, the chain saw 100 further includes a battery pack and a transmission mechanism 180 (also referred to as a transmission structure). The driving device includes a driver. The driver is specifically configured as a motor 130. The battery pack is electrically connected to the motor 130, configured to supply power to the motor 130, to ensure stable working of the chain saw 100. The transmission mechanism 180 is connected between the motor 130 and the cutting element 122, configured to transfer power output by the motor 130 to the cutting element 122, to drive the cutting element 122 to move around the guide plate 121, thereby ensuring stable working of the cutting element 122. The motor 130 and the transmission mechanism 180 are mounted inside the housing 110, and arranged between the grip portion 11 and the working head 120. The battery pack is arranged on an end of the grip portion 111 away from the working head 120, and connected to a battery pack interface 190 on an end of the housing 110.

In another embodiment of the present invention, the chain saw 100 is not equipped with a battery pack, is plugged to an external power supply by a wire for power supply in working.

It should be noted that the transmission mechanism 180 is configured as a gear transmission structure, to drive the cutting element 122 to move around the guide plate 121. Because the transmission mechanism 180 is not an object to be improved in this embodiment, for a specific structure thereof, reference can be directly made to the existing documents and products, and will not be introduced in detail here.

The technical features in the foregoing embodiments can be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of the present invention specifically and in detail, but cannot be construed as a limitation to the patent scope of this application. A person of ordinary skill in the art can make various changes and improvements without departing from the ideas of the present invention, which shall all fall within the protection scope of the present invention. Therefore, the protection scope of the present invention is subject to the protection scope of the appended claims.

In the description of the present invention, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, the terms "first" and "second" are used merely for the purpose of description, and shall not be construed as indicating or implying relative importance or implying a quantity of indicated technical features. Therefore, features defining "first" and "second" can explicitly or implicitly include at least one of the features. In the description of the present invention, "a plurality of' means at least two, such as two and three unless it is specifically defined otherwise.

In the present invention, unless explicitly specified or limited otherwise, the terms "mounted", "connected", "connection", and "fixed" should be understood broadly, for example, which can be fixed connections, detachable connections or integral connections; or can be a mechanical connection or an electrical connection; or the connection can be a direct connection, an indirect connection through an intermediary, or internal communication between two elements or mutual action relationship between two elements, unless otherwise specified explicitly. A person of ordinary skill in the art can understand the specific meanings of the foregoing terms in the present invention according to specific situations.

In the present invention, unless explicitly specified or limited otherwise, a first characteristic "on" or "under" a second characteristic can be the first characteristic in direct contact with the second characteristic, or the first characteristic in indirect contact with the second characteristic by using an intermediate medium. Moreover, the first feature "over", "above" and "up" the second feature can be that the first feature is directly above or obliquely above the second feature, or simply indicates that a horizontal height of the first feature is higher than that of the second feature. The first feature "under", "below" and "down" the second feature can be that the first feature is directly below or obliquely below the second feature, or simply indicates that a horizontal height of the first feature is less than that of the second feature.

It should be noted that when a component is referred to as "being fixed to" or "being arranged on" another component, the component can be directly on the other component, or an intervening component can be present. When a component is considered as "being connected to" another component, the component can be directly connected to the another component, or an intervening component can also be present. The terms "vertical", "horizontal", "upper", "down", "left", "right" and similar expressions used in this specification are only for purposes of illustration but not indicate a unique implementation.

## Claims

1. A chain saw, comprising:
a housing;
a working head, comprising a guide plate and a cutting element arranged around the guide plate, the guide plate being mounted on the housing, and at least partially extending out of the housing;
a driving device, mounted on the housing, configured to connect to and drive the cutting element to move around the guide plate;
a protective member, movably mounted on the housing, and at least partially covered on the working head;
**characterized in that** the chain saw further comprises a pumping mechanism, the pumping mechanism being configured to deliver a lubricating medium to the guide plate and/or the cutting element; the pumping mechanism being configured to output the lubricating medium as triggered by movement of the protective member.

2. The chain saw according to claim 1, **characterized in that** the protective member is configured such that when the working head gradually cuts into a to-be-cut object, the protective member is pushable by the to-be-cut object to move in a direction away from the working head, to trigger the pumping mechanism to output the lubricating medium.

3. The chain saw according to claim 2, **characterized in that** when the protective member does not move or moves in a direction toward the working head, the pumping mechanism does not output the lubricating medium.

4. The chain saw according to claim 2, **characterized in that** the protective member is pivotally connected to the housing.

5. The chain saw according to claim 2, **characterized in that** a return member is further connected between the protective member and the housing, the return member acting on the protective member, being configured to drive the protective member to return to an initial position.

6. The chain saw according to claim 1, **characterized in that** it further comprising a linkage mechanism, the linkage mechanism being movably arranged and linked to the protective member, the protective member moving to drive the linkage mechanism to move, and triggering the pumping mechanism through the linkage mechanism to output the lubricating medium.

7. The chain saw according to claim 6, **characterized in that** the pumping mechanism comprises a lubricating medium storage chamber, a lubricating medium input channel, a lubricating medium output channel, and a control portion, the lubricating medium input channel communicating with the lubricating medium storage chamber, the lubricating medium output channel extending to a position corresponding to the guide plate and/or the cutting element, the control portion being arranged between the lubricating medium input channel and the lubricating medium output channel, a lubricating medium path being formed between the lubricating medium input channel and the lubricating medium output channel, and the control portion being configured to control an on-off state of the lubricating medium path, to enable the pumping mechanism to output the lubricating medium or not to output the lubricating medium; the linkage mechanism is configured to trigger the control portion.

8. The chain saw according to claim 7, **characterized in that** the linkage mechanism triggers, by resisting and cooperating with the control portion, the pumping mechanism to output the lubricating medium.

9. The chain saw according to claim 8, **characterized in that** the control portion comprises a one-way valve and an elastic control, an elastic working chamber being formed in the elastic control, the elastic control being connected to the lubricating medium input channel and the lubricating medium output channel in a sealed manner, and the elastic working chamber communicating with the lubricating medium input channel and the lubricating medium output channel respectively;
the one-way valve is arranged between the elastic working chamber and the lubricating medium input channel and the lubricating medium output channel, configured to control the lubricating medium to only flow from the lubricating medium input channel into the elastic working chamber in one direction and flow from the elastic working chamber into the lubricating medium output channel in one direction;
the linkage mechanism is configured to resist and cooperate with the elastic control, and control an on-off state of the one-way valve by pushing down or releasing the elastic control, to further control communication between the elastic working chamber and the lubricating medium output channel or the lubricating medium input channel, to enable the pumping mechanism to output the lubricating medium or not to output the lubricating medium.

10. The chain saw according to claim 9, **characterized in that** the pumping mechanism further comprises a lubricating medium storage container, a lubricating medium input pipe, a lubricating medium output pipe, and a mounting seat, the lubricating medium storage chamber being formed inside the lubricating medium storage container, the lubricating medium input channel being formed inside the lubricating medium input pipe, the lubricating medium output channel being formed inside the lubricating medium output pipe, the lubricating medium input pipe, the lubricating medium output pipe, the one-way valve, and the elastic control being connected to the mounting seat.

11. The chain saw according to claim 10, **characterized in that** the pumping mechanism further comprises a gland, the gland being connected onto the mounting seat, and tightly pressing an edge of the elastic control between the gland and the mounting seat, to connect the elastic control and the mounting seat in a sealed manner.

12. The chain saw according to claim 8, **characterized in that** the linkage mechanism comprises a cam, the cam being linked to the protective member, the cam comprising a resistance portion configured to resist and cooperate with the control portion, the cam moving with the protective member to trigger the control portion, to enable the pumping mechanism to output the lubricating medium.

13. The chain saw according to claim 12, **characterized in that** the cam is arranged rotatably around a fixed axis, an outline of the cam being configured such that in a process in which the cam moves toward the control portion, the resistance portion is at least partially configured to progressively push down the control portion, to enable the pumping mechanism to continuously output the lubricating medium.

14. The chain saw according to claim 8, **characterized in that** it further comprising a partition plate, the linkage mechanism resisting and cooperating with the control portion through the partition plate, the partition plate being movably mounted on the housing and configured to transfer a pushing pressure of the linkage mechanism to the control portion.

15. The chain saw according to any one of claims 1 to 14, **characterized in that** the chain saw is a one-hand handheld electric chain saw;
the chain saw further comprises a grip portion for operation personnel to hold with one hand, a transmission mechanism, and a battery pack; the battery pack is electrically connected to the driving device, configured to supply power to the driving device; the transmission mechanism is connected between the driving device and the cutting element, configured to transfer power output by the driving device to the cutting element, to enable the cutting element to move around the guide plate;
the driving device and the transmission mechanism are mounted inside the housing and arranged between the grip portion and the working head, the battery pack is mounted on the housing and arranged on an end of the grip portion away from the working head.
